# EUROPÄISCHE PATENTSCHRIFT

(11) **EP 1 177 718 B1**
(45) Veröffentlichungstag und Bekanntmachung des Hinweises auf die Patenterteilung: **09.03.2005**
(21) Anmeldenummer: 01118332.4
(22) Anmeldetag: 27.07.2001
(51) Int. Cl.: A01D 45/02

(54) **Maschine zum Mähen von stängelartingen Erntegut**
Machine for mowing stalk crops
Machine pour faucher des plantes à tiges

(30) Priorität: 01.08.2000 DE 10037534
(43) Veröffentlichungstag der Anmeldung: 06.02.2002
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke, Dr.

(56) Entgegenhaltungen:
- EP-A- 0 760 200
- EP-A- 0 780 050
- AU-B- 426 459
- DE-U- 29 820 638
- NL-A- 7 905 920
- US-A- 3 919 830

## Beschreibung

Die Erfindung betrifft eine Maschine zum Mähen von stängelartigen Erntegut, mit mehreren seitlich nebeneinander angeordneten Einzugs- und Mäheinrichtungen zum Abschneiden und Fördern des Ernteguts, an deren Rückseite ein Querförderkanal vorgesehen ist, durch den das abgeschnittene Erntegut zumindest näherungsweise quer zur Vorwärtsfahrtrichtung transportierbar ist, wobei am stromab liegenden Ende des Querförderkanals ein Einzugskanal angeordnet ist, durch den das Erntegut einer Häckseleinrichtung aufgebbar ist.

In der EP 0 069 898 A ist eine mehrreihige Erntemaschine, insbesondere für Mais, beschrieben, bei der zwei Schneid- und Aufnahmetrommeln mit darunter angeordneten Schneideinrichtungen seitlich nebeneinander angeordnet sind, die auf einem Feld stehendes Gut abschneiden und es Einzugswalzen aufgeben, die das abgeschnittene Gut einer Häckseleinrichtung zuführen. Um das Gut aus den Aufnahmetrommeln zu entfernen und den Einzugswalzen aufzugeben, sind vor der Mitte des von den Einzugswalzen gebildeten Einzugskanals angeordnete Abstreifer vorgesehen. Die freien Enden der Abstreifer bilden einen vertikalen Spalt, zwischen dem ein Führungsteil vorgesehen ist, das aus dem Spalt zwischen den freien Enden der Abstreifer nach oben herausragt.

Die DE 195 27 607 A schlägt eine Mähvorrichtung für stängeliges Erntegut vor, die mehrere nebeneinander angebrachte Mähscheiben mit darüber angeordneten Förderscheiben aufweist. Das abgeerntete Gut wird durch Ausräumerscheiben aus den Förderscheiben entnommen und in einem Einzugskanal angeordneten Einzugswalzen zugeführt, die es einer Häckseleinrichtung aufgeben. Die Ausräumerscheiben der zwei mittleren Förderscheiben sind unmittelbar vor dem Einzugskanal angeordnet. Oberhalb dieser Ausräumerscheiben ist eine quer zur Fahrtrichtung verlaufende Kante vorgesehen, die von der Rückseite der mittleren Teilerspitze gebildet wird, und verhindert, dass Halmgutstängel von den inneren Ausräumerscheiben nach vorn durchgezogen werden.

Bei bekannten Maschinen zum Mähen von stängelartigen Erntegut (DE 195 31 918 A), die mehrere seitlich nebeneinander angeordnete Mäh- und Einzugstrommeln aufweisen, wird das von äußeren Mäh- und Einzugstrommeln abgeerntete Gut zunächst an der Rückseite der Maschine in einem Querförderkanal seitlich transportiert und dann in den Einzugskanal eingeführt, also um 90° entgegen der Fahrtrichtung nach hinten abgelenkt.

Es kommt gelegentlich vor, dass bei der Ernte - beispielsweise von Silomais - am Rand eines Feldes nur ein oder zwei Pflanzenreihen stehen bleiben. Diese Pflanzenreihen können nur mit den äußeren Mäh- und Einzugstrommeln der Maschine geschnitten und eingezogen werden. Bei einer sehr breiten Maschine (z. B. einer 8 oder 10 Pflanzenreihen erfassenden Ausführungsform) müssen die Pflanzen über einen längeren Weg durch den Querförderkanal zur Mitte der Maschine transportiert werden. Da an den mittleren Mäh- und Einzugstrommeln keine weiteren Pflanzen einlaufen, werden die geschnittenen Pflanzen nicht durch in den Querförderkanal eintretendes Material im Querförderkanal gehalten, sondern liegen relativ lose darin. Durch einen hohen Schwerpunkt bedingt, können sich die Pflanzen beim Transport im Querförderkanal immer weiter nach unten neigen und rutschen dann mit ihren unteren Enden aus dem Querförderkanal heraus. Seitlich vor dem Einzugskanal sind Schrägfördertrommeln mit etwa vertikalen Drehachsen angeordnet, deren Aufgabe darin besteht, die Pflanzen in den Einzugskanal zu fördern. Die Schrägfördertrommeln sind aber nicht in der Lage, die mit den unteren Enden aus dem Querförderkanal herausragenden Pflanzen zu erfassen. Die Pflanzen legen sich quer vor die Querfördertrommeln und blockieren dann den weiteren Gutfluss. Durch eine Verengung des Querförderkanals könnte man den Klemmeffekt zwar verbessern, man wird aber im normalen Betrieb, d. h. wenn über die gesamte Breite der Maschine Pflanzen einlaufen, Durchsatzprobleme bekommen.

Das aus der EP 0 069 898 A bekannte Führungsteil und die oberhalb der mittleren Abstreifer angeordnete Kante der DE 195 27 607 A können das Problem ebenfalls nicht lösen.

Das der Erfindung zugrunde liegende Problem wird darin gesehen, die Gutförderung in einer Maschinen zum Mähen von stängelartigen Erntegut zu verbessern, insbesondere wenn nur ein Teil der Mähund Einzugstrommeln mit Pflanzenmaterial beaufschlagt wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, eine antreibbare Fördereinrichtung oberhalb des Querförderkanals und in Vorwärtsfahrtrichtung vor dem Querförderkanal anzuordnen. Die Fördereinrichtung sitzt vorzugsweise dem Einzugskanal gegenüber und ist eingerichtet, einen Stau zu beseitigen, der durch eventuell aus dem Querförderkanal ausgetretenes Erntegut bedingt sein kann. Durch die Fördereinrichtung kann das gestaute Erntegut auf die sich im Querförderkanal befindlichen Pflanzen geschoben werden, die das gestaute Erntegut mitreißen und in den Einzugskanal mitnehmen. Der Stau wird auf diese Weise selbsttätig und unproblematisch beseitigt. Es ist auch denkbar, dass die Fördereinrichtung das Erntegut in den Querförderkanal zurück befördert, von wo es der Weise in den Einzugskanal gefördert wird, auf die auch das im Querförderkanal verbliebene Erntegut in den Einzugskanal gelangt. Möglich wäre auch, dass sie das Erntegut direkt in den Einzugskanal fördert, oder es am Eingang des Einzugskanals angeordneten Umlenkeinrichtungen zuführt, die das im Querförderkanal geförderte Erntegut nach hinten in den Einzugskanal umlenken. Alternativ oder zusätzlich wäre eine hinter dem Querförderkanal angeordnete Fördereinrichtung zur Beseitigung eines Staus denkbar.

Auf diese Weise erhält man eine Maschine zum Mähen von stängelartigem Erntegut, die sich durch hohe Betriebssicherheit auszeichnet.

Die Fördereinrichtung ist vorzugsweise zwischen zwei nebeneinander vor dem Einzugskanal angeordneten Einzugs- und Mäheinrichtungen positioniert, obwohl es auch denkbar wäre, sie oberhalb einer Einzugs- und Mäheinrichtung anzubringen, die mittig vor dem Einzugskanal positioniert ist. In einer anderen Ausführungsform sind zwei Einzugs- und Mäheinrichtungen nebeneinander vor dem Einzugskanal angeordnet, über denen jeweils eine Fördereinrichtung angebracht ist. Denkbar wäre es auch, eine oder mehrere Fördereinrichtungen weiter außen am Querförderkanal anzubringen.

Insbesondere bietet sich an, die Fördereinrichtung auf einer Platte anzuordnen, die über einer oder mehreren, vor dem Einzugskanal angeordneten Einzugs- und Mäheinrichtungen angebracht ist. Diese Platten werden auch als Mitteltisch bezeichnet.

Vorzugsweise wird die Fördereinrichtung rotativ angetrieben. Dazu kann sie über eine Welle und ein Getriebe mit einer ihr benachbarten Einzugs- und Mäheinrichtung verbunden sein, die durch einen Antrieb ebenfalls in Drehung versetzbar ist.

Bezüglich der Form der Fördereinrichtung bestehen verschiedene Möglichkeiten. Zum einen kann sie eine sternförmige, mit überstehenden Mitnehmern ausgestattete Förderscheibe sein. Zum anderen ist auch eine mit derartigen Mitnehmern ausgestattete Förderwalze verwendbar. In beiden Fällen können die Mitnehmer starr an der Förderscheibe oder Förderwalze angebracht sein, obwohl auch gesteuerte Mitnehmer denkbar sind. Die Mitnehmer können somit in Abhängigkeit von ihrer jeweiligen Winkelposition mehr oder weniger weit nach außen von der Förderscheibe bzw. Förderwalze überstehen, wie Finger an Schneckenförderern von Schneidwerken, und/oder verschwenkt werden, wie die Zinken einer Haspel eines Schneidwerks. Die Förderscheibe oder Förderwalze ist um eine Drehachse antreibbar, die in der Regel horizontal und quer zur Vorwärtsfahrtrichtung verläuft, um das aus dem Querförderkanal ausgetretene Erntegut in den Querförderkanal zu fördern. Es können mehrere Förderscheiben bzw. Förderwalzen in Vorwärtsfahrtrichtung hintereinander angeordnet werden, wobei auch eine Mischform, d. h. eine Förderwalze stromab einer Förderscheibe oder umgekehrt, denkbar ist.

Auch ein Fördergurt oder eine Förderkette, der oder die vorzugsweise mit Mitnehmern versehen ist, kann als Fördereinrichtung Verwendung finden.

Weiterhin wird vorgeschlagen, den Antrieb der Fördereinrichtung abschaltbar und/oder reversierbar zu gestalten. Der Antrieb kann auch nur bei Bedarf durch den Bediener der Maschine oder über einen speziellen Sensor, der eine aus dem Querförderkanal heraustretende Pflanze nachweist, in Betrieb gesetzt werden.

Wegen des einfachen konstruktiven Aufbaus ist jedoch ein mit den Einzugs- und Mäheinrichtungen permanent gekoppelter Antrieb bevorzugt. Wird der Antrieb der Maschine im Falle eines Erntegutstaus reversiert, wird automatisch auch die Fördereinrichtung reversiert, so dass sie das Entfernen gestauten Materials aus dem Einzugskanal unterstützen kann. In dieser Ausführungsform ist die Fördereinrichtung von besonderem Vorteil, da das aus dem Einzugskanal beim Reversieren herausgeförderte Erntegut im Anschluss an das Reversieren auch wieder in den Einzugskanal hineinfördert. Im Stand der Technik hat man ohne das zusätzliche Förderelement große Schwierigkeiten, das oberhalb einer auch als Mitteltisch bezeichneten Platte, die über den mittleren zwei Einzugs- und Mäheinrichtungen angeordnet ist, beim Reversieren abgelegte Erntegutpaket wieder einzuziehen. Da das erfindungsgemäße Förderelement genau dort positioniert ist, wo das Erntegutpaket abgelegt wurde, kommt seine Förderwirkung sehr gut zur Wirkung, ohne dass sich unnötige Reibungsverluste ergeben.

Schließlich bietet sich an, beidseits des Eingangs des Einzugskanals Umlenkeinrichtungen vorzusehen, um das im Querförderkanal geförderte Erntegut nach hinten, in den Einzugskanal hinein, umzulenken. Dafür kommen insbesondere drehbare, angetriebene Schrägfördertrommeln mit etwa vertikalen, bzw. leicht nach vorn geneigten Drehachsen in Frage, wie sie an sich aus der EP 0 508 189 A bekannt sind.

In den Zeichnungen sind drei nachfolgend näher beschriebene Ausführungsbeispiele der Erfindung dargestellt. Es zeigt:
- Fig. 1: perspektivische Ansicht einer Maschine zum Mähen von stängelartigem Erntegut in schematischer Darstellung,
- Fig. 2: eine Ansicht einer anderen Maschine zum Mähen von stängelartigem Erntegut, und
- Fig. 3: eine Ansicht einer wiederum anderen Maschine zum Mähen von stängelartigem Erntegut.

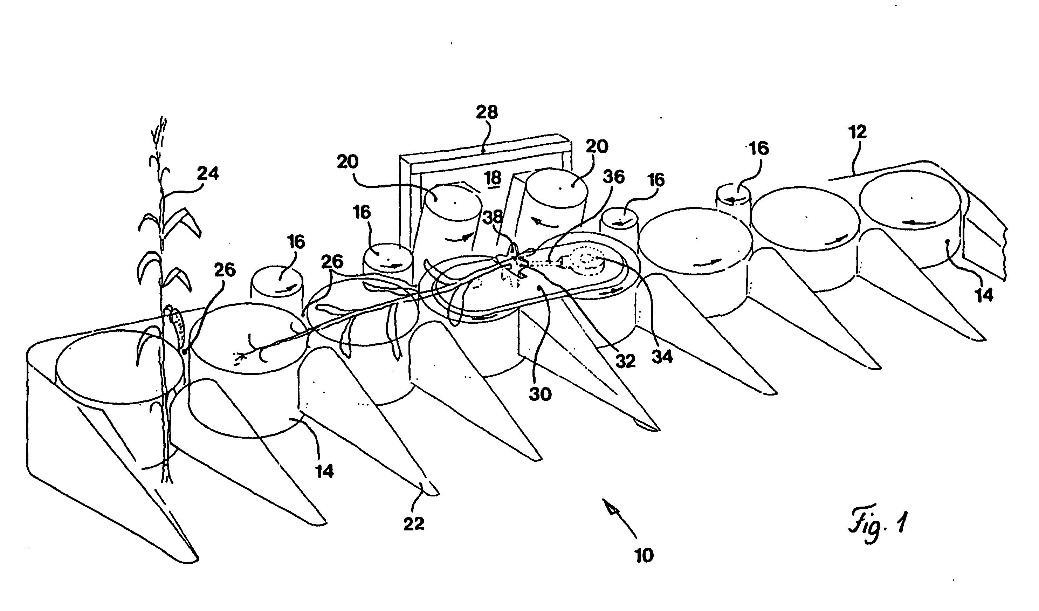

In Figur 1 ist eine erfindungsgemäße Maschine 10 zum Mähen von stängelartigem Erntegut wiedergegeben. An einem schematisch dargestellten Rahmen 12 sind seitlich nebeneinander acht Einzugs- und Mäheinrichtungen 14 angebracht, die in an sich bekannter Weise aus koaxial über zugehörigen Mähscheiben angeordneten Förderscheiben mit einer Vielzahl von über den Umfang verteilten taschenförmigen Aussparungen bestehen. Die Förderscheiben erfassen und transportieren das stängelartige Erntegut, das mittels der Mähscheiben vom Boden des Feldes abgeschnitten wird. Die Anzahl der Einzugs- und Fördereinrichtungen 14 der Maschine 10 ist beliebig, es können also mehr oder weniger als die in Figur 1 dargestellten acht Einzugs- und Fördereinrichtungen 14 Verwendung finden. An der Rückseite der Einzugs- und Mäheinrichtungen 14 wird das Erntegut durch (in den Zeichnungen aus Gründen der Übersichtlichkeit nicht dargestellte) Ausräumer, die als rotierende Scheiben oder feststehende Elemente ausgeführt sein können, aus den Förderscheiben entnommen, und durch mit den Einzugs- und Mäheinrichtungen 14 zusammenwirkende Querfördertrommeln 16, die mit abstehenden Mitnehmerzähnen versehen sind, die entsprechende Schlitze in der Rückwand der Maschine 10 durchdringen, in seitlicher Richtung zur Mitte der Maschine 10 gefördert.

An der Rückseite der Mitte der Maschine 10 ist der Einzugskanal 18 eines Feldhäckslers angeordnet. Das Erntegut wird in der Mitte der Maschine 10 durch beidseits in Vorwärtsfahrtrichtung vor dem Einzugskanals 18 angeordnete Schrägfördertrommeln 20, die ebenfalls mit Mitnehmerzähnen versehen sind, in den Einzugskanal 18 gefördert. Die Drehachsen der Schrägfördertrommeln 20 sind nach vorn geneigt. Die Einzugs- und Mäheinrichtungen 14 werden um etwa vertikale, bzw. leicht nach vorn geneigte Drehachsen angetrieben. Auch die Querfördertrommeln 16 und die Schrägfördertrommeln 20 werden in Drehung versetzt. Der entsprechende Antrieb erfolgt durch eine selbstfahrende Erntemaschine, in der Regel einen Feldhäcksler, dessen Einzugskanal 18 rückseitig an der Mitte der Maschine angeordnet ist, und die die Maschine in Vorwärtsfahrtrichtung über ein Feld bewegt. Die Maschine 10 ist durch einen Trägerrahmen 28 lösbar an der selbstfahrenden Erntemaschine befestigt. Die Drehrichtungen der Einzugs- und Mäheinrichtungen 14 sind beidseits der Längsmittelebene der Maschine 10 gegensinnig, wobei sich die jeweils inneren drei Einzugs- und Mäheinrichtungen 14 gegensinnig zu den jeweils ganz außen angeordneten Einzugs- und Mäheinrichtungen 14 drehen.

Wird die Maschine 10 über ein Feld bewegt, werden die dort stehenden Pflanzen 24 ggf. durch Stängelteiler 22 seitlich zur Seite gedrückt, und von den reihenunabhängig wirkenden Einzugsund Mäheinrichtungen 14 erfasst und vom Boden abgetrennt. Die Pflanzen 24 werden dann quer zur Vorwärtsfahrtrichtung im Querförderkanal 26, der zwischen der Rückwand der Maschine 10 und den Querfördertrommeln 16 einerseits und den Einzugs- und Mäheinrichtungen 14 andererseits definiert ist, zur Mitte der Maschine 10 transportiert. Dort werden sie durch die Schrägfördertrommeln 20 in den Einzugskanal 18 gefördert.

Anzumerken ist, dass die Ausgestaltung des Querförderkanals 26 im Rahmen des erfindungsgemäßen Gedankens beliebig ist. Es kann sich wie in den Figuren 1 - 3 um einen zwischen der Rückwand der Maschine 10 und den davor angeordneten Einzugs- und Mäheinrichtungen 14 gebildeten Kanal handeln, durch den das Gut durch die Einzugs- und Mäheinrichtung 14 im Zusammenwirken mit dahinter angeordneten Querfördertrommeln 16 oder mit angetriebenen Ausräumerscheiben oder Querfördergurten transportiert wird (DE 195 27 607 A, DE 195 31 918 A und DE 198 56 444 A). Auch ein von den Einzugs- und Mäheinrichtungen 14 unabhängiger Transport des Ernteguts im Querförderkanal 26 ist denkbar, der durch separate Förderer beispielsweise in Form von Fördergurten oder Förderschnecken (GB 2 012 154 A) bewerkstelligt werden kann.

Insbesondere, falls nur eine äußere Einzugs- und Mäheinrichtung 14 mit Erntegut beaufschlagt wird, ist es denkbar, dass einzelne Pflanzen wegen fehlender Gutzufuhr von den anderen Einzugs- und Mäheinrichtungen 14 nicht sicher im Querförderkanal 26 festgehalten werden können. Diese Pflanzen 24 können, wie die in Figur 1 mit dem Bezugszeichen 24' gekennzeichnete Pflanze, wegen ihres relativ hohen Schwerpunkts umfallen und mit ihrem unteren Ende aus dem Querförderkanal 26 heraus gelangen. In einem derartigen Fall ist es möglich, dass die Pflanze auf dem zwischen den zwei mittleren Einzugs- und Mäheinrichtungen 14 angeordneten, plattenförmigen Mitteltisch 30 zu liegen kommt. Bei bekannten Maschinen 10 zum Mähen stängelartigen Ernteguts muss der Fahrer den Motor des Feldhäckslers abstellen, aus der Bedienerkabine heraussteigen und die Pflanze 24' manuell vom Mitteltisch 30 entfernen.

Um diesen Nachteil zu vermeiden, ist an der Mitte der Oberseite des Mitteltischs 30 eine Fördereinrichtung 32 in Form einer mit Mitnehmern 38 versehenen, sternförmigen Förderscheibe angeordnet, die in einer vertikalen und parallel zur Vorwärtsfahrtrichtung orientierten Ebene liegt. Die Fördereinrichtung 32 durchdringt eine Öffnung im Mitteltisch 30. Sie ist durch eine Welle 36 und ein Getriebe 34 antriebsmäßig mit einer Einzugs- und Mäheinrichtung 14 verbunden. Sie wird um eine horizontale, quer zur Vorwärtsfahrtrichtung der Maschine 10 verlaufende Drehachse angetrieben, wobei die Welle 36 und die Drehachse der Fördereinrichtung 32 unterhalb des Mitteltischs 30 liegen. Die Fördereinrichtung 32 fördert Pflanzen 24', die aus dem Querförderkanal 26 herausgelangt sind, selbsttätig wieder in den Querförderkanal 26 hinein, da ihre Oberseite sich im normalen Erntebetrieb in Richtung auf den Einzugskanal 18 zu dreht. Dort werden die Pflanzen durch die Schrägfördertrommeln 20 in den Einzugskanal 18 gefördert.

Durch die antriebsmäßige Kopplung der Fördereinrichtung 32 mit den Einzugs- und Mäheinrichtungen 14 wird die Fördereinrichtung 32 im Reversierbetrieb der Maschine 10 in umgekehrter Drehrichtung angetrieben. Sie unterstützt das Ablegen beim Reversieren aus dem Einzugskanal 18 ausgeworfenen Ernteguts auf dem Mitteltisch 30. Wird nach dem Reversieren der normale Erntebetrieb wieder aufgenommen, fördert sie das auf dem Mitteltisch 30 abgelegte Erntegut wieder in den Querförderkanal 26 hinein, von dem aus sie in den Einzugskanal 18 gelangen.

Bei der in Figur 2 dargestellten Ausführungsform einer erfindungsgemäßen Maschine 10 zum Mähen von stängelartigem Erntegut, von der nur die mittleren vier Einzugs- und Mäheinrichtungen 14 dargestellt sind, finden zwei auf dem Mitteltisch 30 in Vorwärtsfahrtrichtung hintereinander angeordnete Fördereinrichtungen 32 mit parallelen Drehachsen Verwendung. Die beiden Fördereinrichtungen 32 werden gleichsinnig angetrieben und ermöglichen über die gesamte Länge des Mitteltischs 30, dort zum liegen kommende Pflanzen in den Querförderkanal 26 zurück und von dort in den Einzugskanal 18 zu fördern. Im übrigen Aufbau ist die Maschine 10 mit der in Figur 1 gezeigten identisch, wobei einander entsprechende Elemente mit übereinstimmenden Bezugszeichen gekennzeichnet sind.

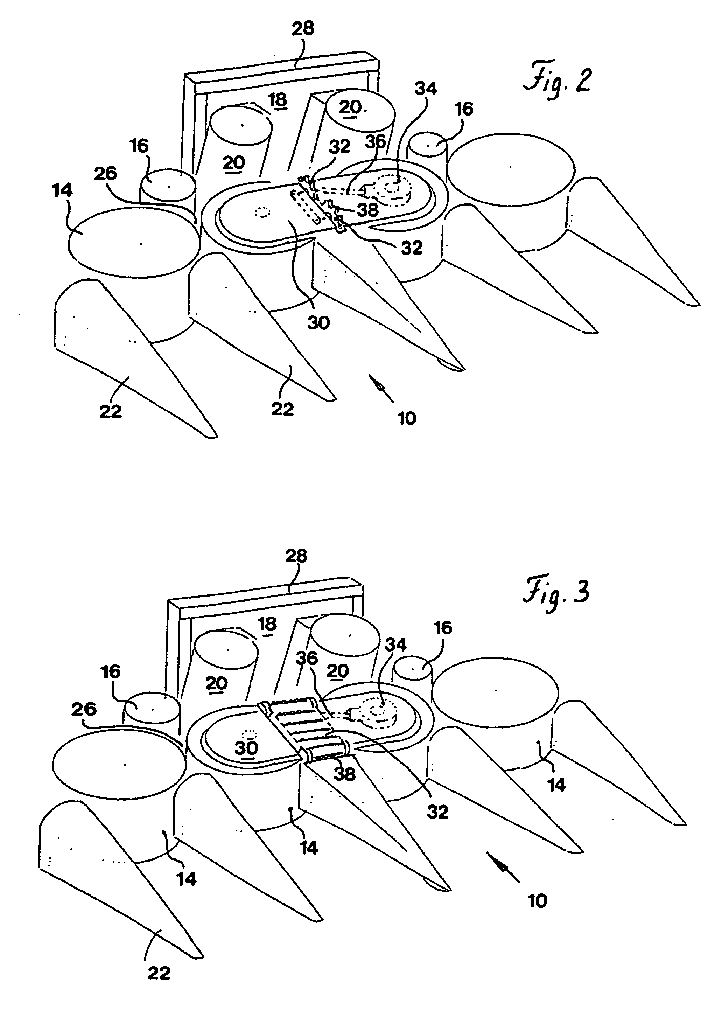

In Figur 3 ist eine dritte Ausführungsform einer erfindungsgemäßen Maschine 10 zum Mähen von stängelartigem Erntegut dargestellt. Sie ist mit einer Fördereinrichtung 32 in Form eines Fördergurts mit Mitnehmern 38 ausgestattet. Der in der Mitte des Mitteltischs 30 angeordnete, sich in Vorwärtsfahrtrichtung erstreckende Fördergurt wird von einer Einzugs- und Mäheinrichtung 14 durch das Getriebe 34 und die Welle 36 derart angetrieben, dass sich seine oberhalb des Mitteltischs 30 angeordnete Oberseite während des normalen Erntebetriebs in Richtung auf den Einzugskanal 18 zu bewegt. Eventuell aus dem Querförderkanal 26 ausgetretene Pflanzen werden auf diese Weise selbsttätig wieder in den Querförderkanal 26 hineingefördert und gelangen von dort in den Einzugskanal 18. Ansonsten entspricht die Maschine 10 in Figur 3 den in den Figuren 1 und 2 dargestellten Maschinen.

## Patentansprüche

1. Maschine (10) zum Mähen von stängelartigem Erntegut, mit mehreren seitlich nebeneinander angeordneten Einzugs- und Mäheinrichtungen (14) zum Abschneiden und Fördern des Ernteguts, an deren Rückseite ein Querförderkanal (26) vorgesehen ist, durch den das abgeschnittene Erntegut zumindest näherungsweise quer zur Vorwärtsfahrtrichtung transportierbar ist, wobei am stromab liegenden Ende des Querförderkanals (26) ein Einzugskanal (18) angeordnet ist, durch den das Erntegut einer Häckseleinrichtung aufgebbar ist, **gekennzeichnet durch** eine antreibbare Fördereinrichtung (32), die über dem und in Vorwärtsfahrtrichtung vor dem Querförderkanal (26) angeordnet ist, um gegebenenfalls einen Stau zu beseitigen, der **durch** aus dem Querförderkanal (26) ausgetretenes Erntegut bedingt ist.

2. Maschine nach Anspruch 1, **dadurch gekennzeichnet, dass** die Fördereinrichtung (32) dem Einzugskanal (18) gegenüberliegend angeordnet ist.

3. Maschine (10) nach Anspruch 1 oder 2, **dadurch gekennzeichnet, dass** die Fördereinrichtung (32) zwischen zwei nebeneinander vor dem Einzugskanal (18) positionierten Einzugs- und Mäheinrichtungen (14) angeordnet ist.

4. Maschine (10) nach einem der Ansprüche 1 bis 3, **dadurch gekennzeichnet, dass** die Fördereinrichtung (32) auf einem oberhalb einer Einzugs- und Mäheinrichtung (14) oder mehrerer Einzugs- und Mäheinrichtungen (14) angeordneten, plattenförmigen Mitteltisch (30) angeordnet ist.

5. Maschine (10) nach einem der Ansprüche 1 bis 4, **dadurch gekennzeichnet, dass** die Fördereinrichtung (32) rotativ antreibbar ist.

6. Maschine (10) nach Anspruch 5, **dadurch gekennzeichnet, dass** die Fördereinrichtung (32) einen oder mehrere, mit Mitnehmern (38) ausgestattete Förderscheiben und/oder Förderwalzen umfasst, die vorzugsweise um eine horizontale und quer zur Vorwärtsfahrtrichtung verlaufende Achse drehbar ist oder sind.

7. Maschine (10) nach Anspruch 6, **dadurch gekennzeichnet, dass** wenigstens zwei Förderscheiben und/oder Förderwalzen in Vorwärtsfahrtrichtung hintereinander angeordnet sind.

8. Maschine (10) nach einem der Ansprüche 1 bis 4, **dadurch gekennzeichnet, dass** die Fördereinrichtung (32) ein Fördergurt oder eine Förderkette ist, vorzugsweise mit Mitnehmern (38).

9. Maschine (10) nach einem der Ansprüche 1 bis 8, **dadurch gekennzeichnet, dass** der Antrieb der Fördereinrichtung (32) abschaltbar und/oder umkehrbar ist.

10. Maschine (10) nach einem der Ansprüche 1 bis 9, **dadurch gekennzeichnet, dass** die Fördereinrichtung (32) antriebsmäßig mit einer benachbarten Einzugs- und Mäheinrichtung (14) verbunden ist.

## Claims

1. A machine (10) for mowing stalk-like crops, with a plurality of infeed and mowing devices (14) arranged alongside one another for cutting and feeding the harvested crop, with a transverse conveyor channel (26) provided at their rear side, through which the cut harvested crop can be transported at least approximately transverse to the direction of forward travel, wherein an infeed channel (18) through which the harvested crop can be delivered to a chopper device is arranged at the downstream end of the transverse conveyor channel (26), **characterized by** a drivable conveyor device (32) which is arranged over the transverse conveyor channel (26) and ahead thereof in the direction of forward travel, in order to eliminate a jam when needed, caused by harvested crop leaving the transverse conveyor channel (26).

2. A machine according to claim 1, **characterized in that** the conveyor device (32) is arranged opposite to the infeed channel (18).

3. A machine (10) according to claim 1 or 2, **characterized in that** the conveyor device (32) is arranged between two infeed and mowing devices (14) positioned beside one another in front of the infeed channel (18).

4. A machine (10) according to any of claims 1 to 3, **characterized in that** the conveyor device (32) is arranged on a central table (30) of plate form arranged above an infeed and mowing device (14) or a plurality of infeed and mowing devices (14).

5. A machine (10) according to any of claims 1 to 4, **characterized in that** the conveyor device (32) can be driven in rotation.

6. A machine (10) according to claim 5, **characterized in that** the conveyor device (32) comprises one or more feed discs and/or feed rolls which is or are equipped with entraining elements (38) and is or are preferably rotatable about an axis extending horizontally and transverse to the direction of forward travel.

7. A machine (10) according to claim 6, **characterized in that** at least two feed discs and/or feed rolls are arranged one behind the other in the direction of forward travel.

8. A machine (10) according to any of claims 1 to 4, **characterized in that** the conveyor device (32) is a conveyor belt or conveyor chain, preferably with entraining elements (38).

9. A machine (10) according to any of claims 1 to 8, **characterized in that** the drive to the conveyor device (32) can be switched off and/or reversed.

10. A machine (10) according to any of claims 1 to 9, **characterized in that** the conveyor device (32) is drivably coupled to an adjacent infeed and mowing device (14).

## Revendications

1. Machine (10) destinée à faucher une récolte de plantes à tiges comportant une pluralité de systèmes d'introduction et de fauchage (14) disposés l'un à côté de l'autre et destinés à couper et à acheminer les plantes récoltées, sur le côté arrière desquels est prévu un canal transversal de transport (26), par lequel les plantes coupées peuvent être transportées au moins sensiblement transversalement à la direction d'avancement, à l'extrémité en aval du canal transversal de transport (26) étant disposé un canal d'introduction (18), par lequel peuvent être expédiées les plantes à un système de hachage, **caractérisée par** un système d'amenée (32) entraînable qui est placé dans la direction d'avancement au-dessus et devant le canal transversal de transport (26), en vue, si le cas se présente, d'éliminer tout bourrage généré par les plantes émergeant du canal transversal de transport (26).

2. Machine (10) selon la revendication 1, **caractérisée en ce que** le système d'amenée (32) est disposé en face du canal d'introduction (18).

3. Machine (10) selon la revendication 1 ou 2, **caractérisée en ce que** le système d'amenée (32) est placé entre deux systèmes d'introduction et de fauchage (14) positionnés l'un à côté de l'autre avant le canal d'introduction (18).

4. Machine (10) selon l'une quelconque des revendications 1 à 3, **caractérisée en ce que** le système d'amenée (32) est installé sur une table centrale en forme de plaque (30) placée au-dessus d'un système d'introduction et de fauchage (14), ou de plusieurs systèmes d'introduction et de fauchage (14).

5. Machine (10) selon l'une quelconque des revendications 1 à 4, **caractérisée en ce que** le système d'amenée (32) peut être entraîné en rotation.

6. Machine (10) selon la revendication 5, **caractérisée en ce que** le système d'alimentation (32) comprend un ou plusieurs disques de transport et/ou rouleaux de transport équipés d'éléments d'entraînement (38), lequel ou lesquels est/sont rotatif(s) autour d'un axe s'étendant orthogonalement à la direction d'avancement.

7. Machine (10) selon la revendication 6, **caractérisée en ce qu'**au moins deux disques de transport et/ou rouleaux de transport sont disposés l'un derrière l'autre dans la direction d'avancement.

8. Machine (10) selon l'une quelconque des revendications 1 à 4, **caractérisée en ce que** le système d'amenée (32) consiste en un tapis transporteur ou une chaîne transporteuse, de préférence avec des éléments d'entraînement (38).

9. Machine (10) selon l'une quelconque des revendications 1 à 8, **caractérisée en ce que** l'entraînement du système d'amenée (32) peut être déconnecté et/ou inversé.

10. Machine (10) selon l'une quelconque des revendications 1 à 9, **caractérisée en ce que** le système d'alimentation (32) est en relation d'entraînement avec un système d'introduction et de fauchage (14) voisin.
